(19) Europäisches Patentamt European Patent Office Office européen des brevets

(11) EP 4 339 141 A1

(12) EUROPEAN PATENT APPLICATION
published in accordance with Art. 153(4) EPC

(43) Date of publication:
20.03.2024 Bulletin 2024/12

(51) International Patent Classification (IPC):
B65G 54/02 (2006.01)    G01N 35/04 (2006.01)

(21) Application number: 22807084.3

(52) Cooperative Patent Classification (CPC):
B65G 54/02; G01N 35/04

(22) Date of filing: 28.02.2022

(86) International application number:
PCT/JP2022/008252

(87) International publication number:
WO 2022/239377 (17.11.2022 Gazette 2022/46)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 13.05.2021 JP 2021081527

(71) Applicant: HITACHI HIGH-TECH CORPORATION
Tokyo 105-6409 (JP)

(72) Inventors:
• AZUMA, Shinji
  Tokyo 105-6409 (JP)
• AKASE, Hiroki
  Tokyo 105-6409 (JP)
• WATANABE, Hiroshi
  Tokyo 105-6409 (JP)
• YANO, Shigeru
  Tokyo 105-6409 (JP)

(74) Representative: MERH-IP Matias Erny Reichl
Hoffmann
Patentanwälte PartG mbB
Paul-Heyse-Strasse 29
80336 München (DE)

(54) SPECIMEN CONVEYANCE DEVICE, SPECIMEN ANALYSIS SYSTEM AND SPECIMEN CONVEYANCE METHOD

(57) There is provided a sample conveying device capable of stable conveyance while suppressing power consumption, a sample analysis system, and a method for conveying a sample.

In the sample conveying device, the specifications of one of coils 706, 706B, 706C, 706D, 706E, 706F, and 706G or coil shafts 705, 705A, 705C, .705D, 705E, 705F, and 705G are different between magnetic poles 707A, 707B, 707C, 707E, and 707G directly below positions where a container holder 100 does not stop and the magnetic poles 707, 707D, and 707G directly below positions where the container holder 100 stops in a conveyance tile 120.

[FIG. 3]

EP 4 339 141 A1

**Description**

Technical Field

The present invention relates to a sample conveying device, a sample analysis system, and a method for conveying a sample used in a sample analysis system for analyzing biological samples (hereinafter referred to as sample) such as blood, plasma, serum, urine, and other body fluids, and in a sample preprocessing system that performs preprocessing necessary for analysis.

Background Art

As an example of a laboratory sample distribution system, which is fairly flexible and has high conveyance performance, and a corresponding method of operation, PTL 1 discloses a laboratory sample distribution system including several container carriers, each of the container carriers including at least one magnetic active device, preferably at least one permanent magnet and being adapted to convey a sample container, a conveyance plane adapted to convey the container carriers, and several electromagnetic actuators arranged below the conveyance plane in a manner of being stationary, the electromagnetic actuator being adapted to move the container carriers on the conveyance plane by applying a magnetic force to the container carriers.

Citation List

Patent Literature

PTL 1: JP2017-77971A

Summary of Invention

Technical Problem

In a sample analysis system for clinical examinations, for example, biological samples (hereinafter referred to as "sample") such as blood, plasma, serum, urine, and other body fluids are tested for specified analysis items. In this sample analysis system, devices having a plurality of functions are connected to automatically execute processing in each step. That is, in order to rationalize works in a laboratory, an analysis unit (analysis step) that executes a plurality of kinds of analysis such as biochemical analysis and immunoanalysis, a preprocessing unit (preprocessing step) that executes a plurality of preprocessing required for these kinds of analysis, and the like are connected by a conveyance line and used as one sample analysis system.

In recent years, due to sophistication of medical care and aging of patients, importance of sample analysis has been increased. Therefore, in order to improve an analysis processing capability of the sample analysis system, highspeed conveyance, mass conveyance, simultaneous conveyance, and conveyance in multiple directions of a sample are desired.

As a background of this technical field, a technique disclosed in PTL 1 is provided. In the technique disclosed in PTL 1, a holder is driven by an electromagnetic force generated by applying a current to a coil. This method is expected to have higher power consumption than motor, pulley, and belt methods. Therefore, a conveyance system that drives a holder while reducing power consumption has been proposed.

However, the electromagnetic force also serves to drive a holder and detect a holder position at the same time, and there is a trade-off relationship in which a driving force decreases when accuracy of position detection is increased, and the accuracy of the position detection decreases when the driving force is increased. Therefore, it is difficult to satisfy both conditions, and improvement is waiting.

The invention provides a sample conveying device capable of stable conveyance while reducing power consumption, a sample analysis system, and a method for conveying a sample.

Solution to Problem

The invention includes a plurality of methods for solving the above problem, and an example thereof is a sample conveying device that conveys a sample container containing a sample. The sample conveying deviceincludes: a holder that includes a magnetic material and holds the sample container; and a conveyance tile that includes a plurality of magnetic poles, each of which includes a coil shaft and a coil wound around an outer peripheral side of the coil shaft, in which specifications of either the coil or the coil shaft are different between the magnetic pole directly below a position where the holder does not stop and the magnetic pole directly below a position where the holder stops in the conveyance tile.

Advantageous Effects of Invention

According to the invention, stable conveyance can be implemented while reducing power consumption. Problems, configurations, and effects other than those described above will be further clarified with the following description of embodiment.

Brief Description of Drawings

[FIG. 1] FIG. 1 is a plan view illustrating a configuration of the entire sample analysis system provided with a sample conveying device according to an embodiment of the present invention.
[FIG. 2] FIG. 2 is a top view illustrating an example of a configuration of the sample conveying device according to the embodiment.

[FIG. 3] FIG. 3 is a cross-sectional view taken along line A-A' in FIG. 2.

[FIG. 4] FIG. 4 is a diagram illustrating a relationship between a coil shaft diameter and thrust in electromagnetic conveyance.

[FIG. 5] FIG. 5 is a diagram illustrating a relationship between the coil shaft diameter in electromagnetic conveyance and a rate of change in inductance related to detection.

[FIG. 6] FIG. 6 is a diagram corresponding to a cross section taken along line A-A' in FIG. 2, illustrating an example of another configuration of the sample conveying device according to the embodiment.

[FIG. 7] FIG. 7 is a diagram corresponding to a cross section taken along line A-A' in FIG. 2, illustrating an example of still another configuration of the sample conveying device according to the embodiment.

[FIG. 8] FIG. 8 is a diagram corresponding to a cross section taken along line A-A' in FIG. 2, illustrating an example of still another configuration of the sample conveying device according to the embodiment.

[FIG. 9] FIG. 9 is a top view illustrating an example of still another configuration of the sample conveying device according to the embodiment.

[FIG. 10] FIG. 10 is a cross-sectional view taken along line B-B' in FIG. 9.

Description of Embodiments

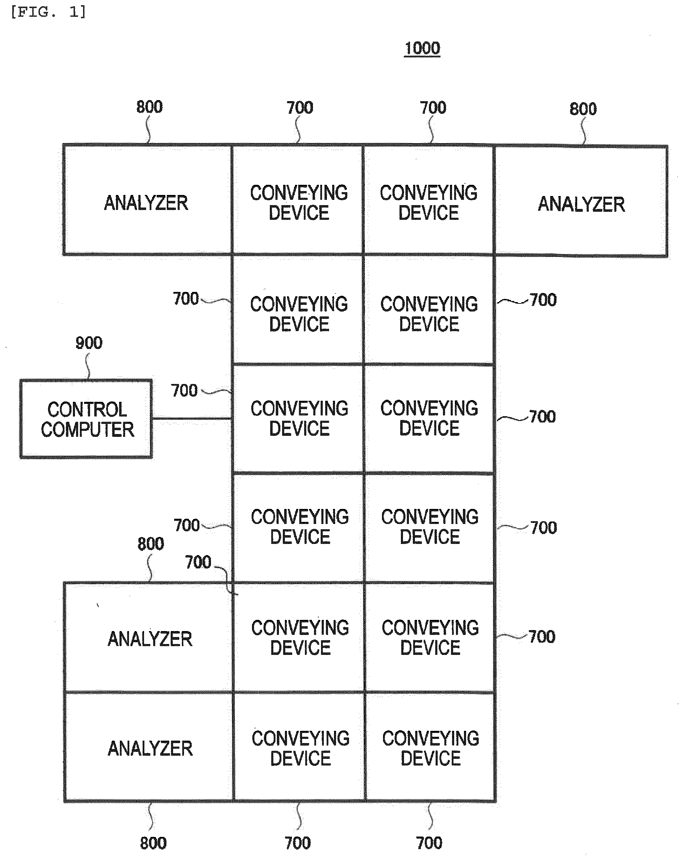

An embodiment of a sample conveying device, a sample analysis system, and a method for conveying a sample according to the invention will be described with reference to FIGS. 1 to 10. In the drawings used in this description, the same or corresponding components are denoted by the same or similar reference signs, and repeated description of these components may be omitted.

First, an overall configuration of the sample analysis system will be described with reference to FIG. 1. FIG. 1 is a plan view illustrating a configuration of the entire sample analysis system provided with the sample conveying device according to a present embodiment.

A sample analysis system 1000 according to the present embodiment illustrated in FIG. 1 is a system including an analyzer that automatically analyzes components of a sample such as blood and urine.

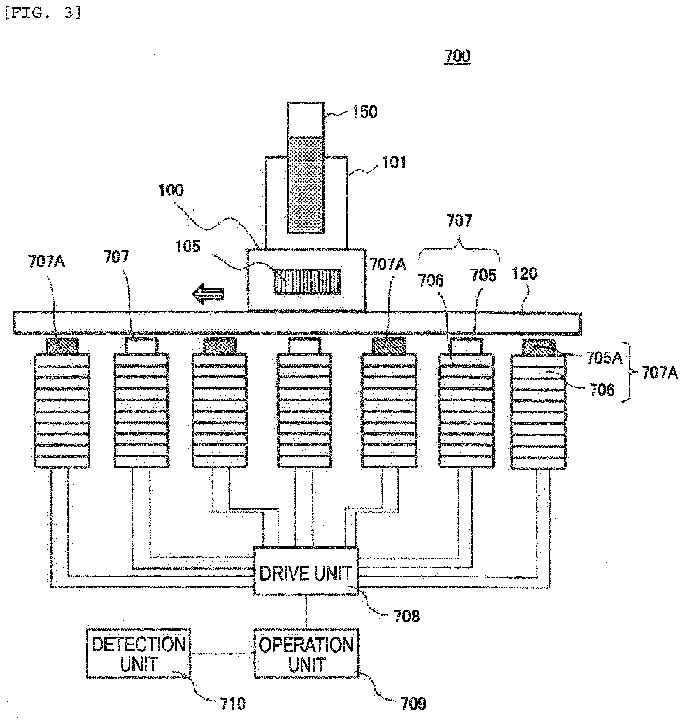

Main components of the sample analysis system 1000 are a plurality of conveying devices 700 (twelve in FIG. 1) that conveys a container holder 100 (see FIG. 3) on which a sample container 150 (see FIG. 3) containing a sample is mounted or an empty container holder 100 on which no sample container 150 is mounted to a predetermined destination, a plurality of analyzers 800 (four in FIG. 1), and a control computer 900 that integrally manages the sample analysis system 1000.

The analyzer 800 is a unit that performs qualitative and quantitative analysis of components of a sample conveyed by the conveying device 700. Analysis items in this unit are not particularly limited, and a configuration of a known automatic analyzer that analyzes biochemical items and immune items can be adopted. Further, when a plurality of analyzers 800 are provided, the analyzers 800 may have the same or different specifications, and are not particularly limited.

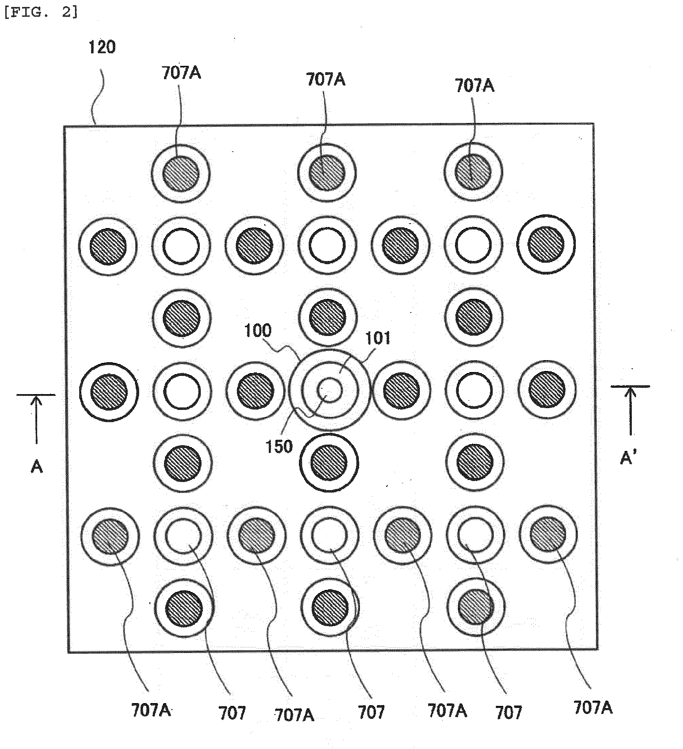

Each of the conveying devices 700 is a device that conveys the sample container 150 containing the sample, which is mounted on the container holder 100, to a destination (analyzer 800, outlet, or the like) by sliding on a conveyance path by interaction between a magnetic pole 707 (see FIG. 3) and a magnetic material 105 (see FIG. 3) provided in the container holder 100. Details thereof will be described in detail with reference to FIG. 2 and subsequent drawings.

The control computer 900 controls an operation of the overall system including the conveying devices 700 and the analyzers 800, and is implemented by a computer including a display device such as a liquid crystal display, an input device, a storage device, a CPU, and a memory. The control of the operation of each device by the control computer 900 is executed based on various programs recorded in the storage device.

An operation control processing executed by the control computer 900 may be integrated into one program, may be divided into a plurality of programs, or may be performed in a combination thereof. A part or all of the programs may be implemented by dedicated hardware, or may be modularized.

In FIG. 1 described above, a case is described in which four analyzers 800 are provided. However, the number of the analyzers 800 is not particularly limited and may be one or more. Similarly, the number of the conveying devices 700 is not particularly limited and may be one or more.

The sample analysis system 1000 can be provided with various sample preprocessing and postprocessing units that perform preprocessing and postprocessing on a sample. A detailed configuration of the sample preprocessing and postprocessing unit is not particularly limited, and a configuration of a known preprocessing device can be adopted.

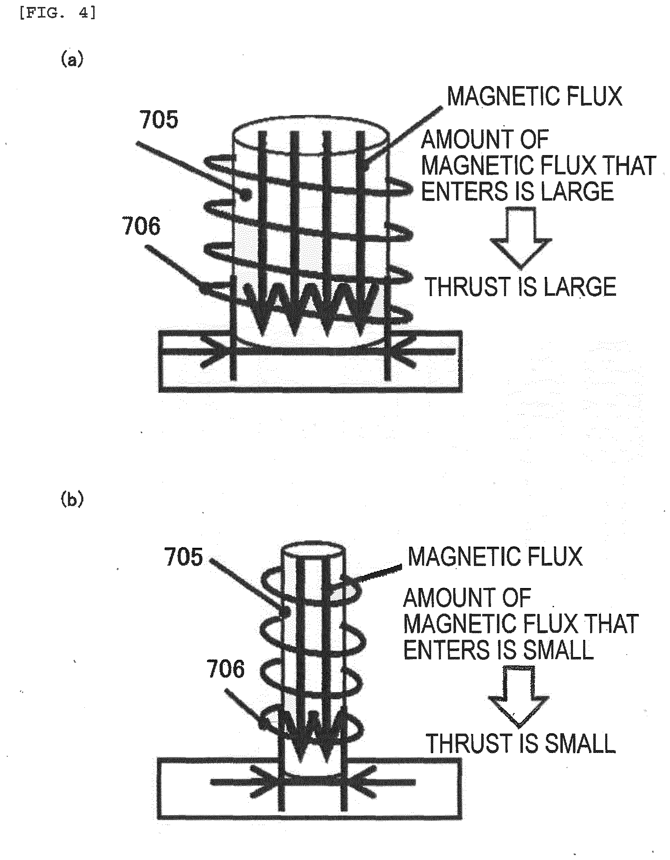

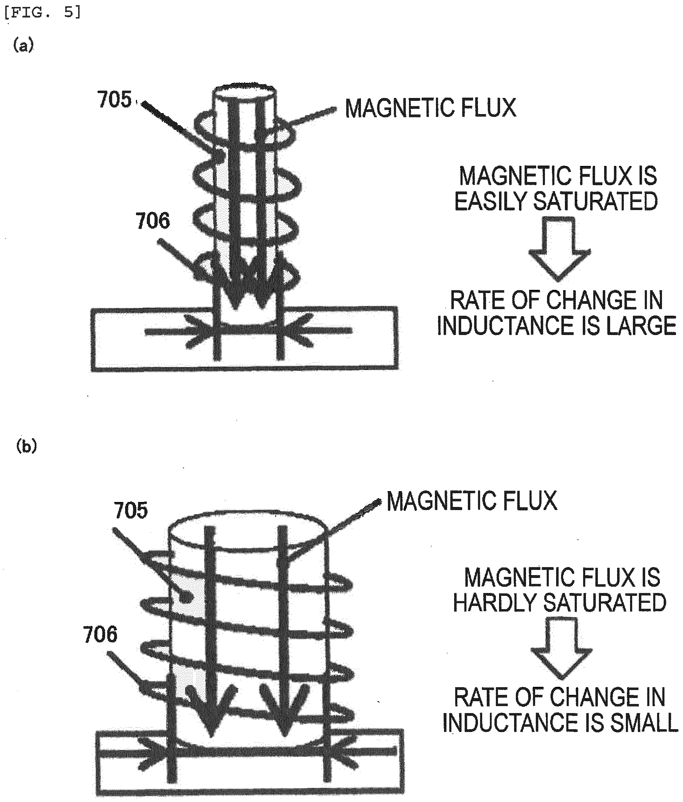

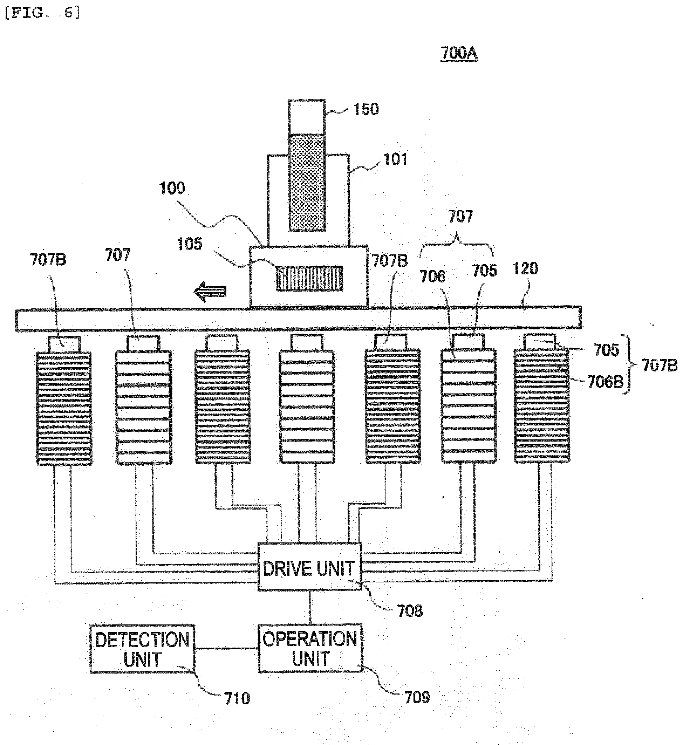

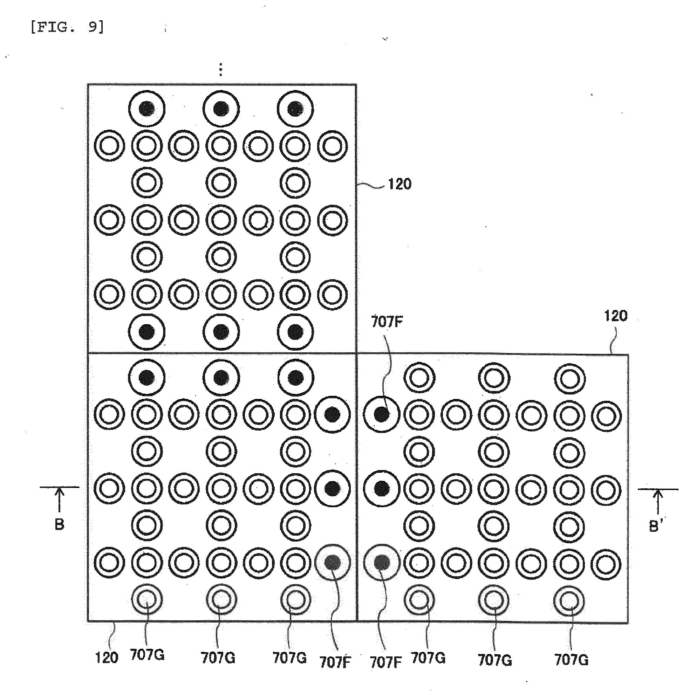

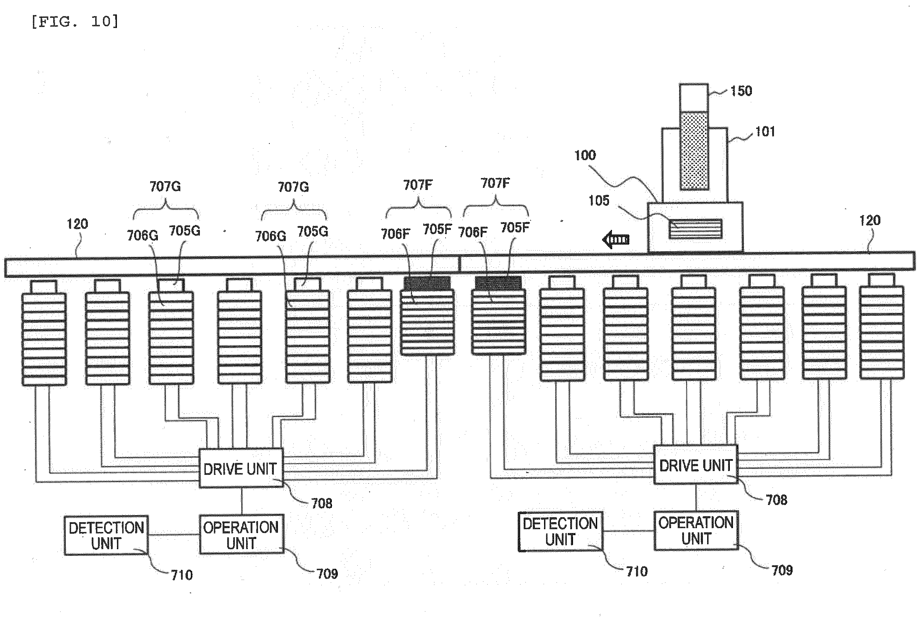

Next, a configuration of the conveying device 700 according to the present embodiment will be described with reference to FIGS. 2 to 10. FIG. 2 is a top view illustrating a configuration of the sample conveying device. FIG. 3 is a cross-sectional view taken along line A-A' in FIG. 2. FIG. 4 is a diagram illustrating a relationship between a coil shaft diameter and a thrust in electromagnetic conveyance. FIG. 5 is a diagram illustrating a relationship between the coil shaft diameter in electromagnetic conveyance and a rate of change in inductance related to detection. FIGS. 6 to 8 are diagrams corresponding to a cross section taken along line A-A' in FIG. 2, illustrating an example of another configuration of the sample conveying device. FIG. 9 is a top view illustrating an example of still another configuration of the sample conveying device. FIG. 10 is a cross-sectional view taken along line B-B' in FIG. 9.

As illustrated in FIGS. 2 and 3, a sample to be tested in the sample analysis system 1000 is handled in a state of being collected and contained in the sample container 150. The sample container 150 is manually inserted into the container holder 100 by an operator or by an automatic insertion unit and conveyed in a system, and is subjected to various types of processing such as preprocessing and analysis.

One or more container holders 100 on which sample containers 150 containing samples are mounted are provided in the conveying device 700. Each of the container holders 100 includes a magnetic material 105 and a gripping part 101 that supports the sample container 150.

The magnetic material 105 is provided near a bottom surface of each of the plurality of container holders 100, and the container holder 100 is conveyed by an electromagnetic force acting on the magnetic material 105.

The magnetic material 105 is formed of, for example, a permanent magnet such as neodymium or ferrite. Alternatively, the magnetic material 105 can also be formed of other magnets or magnetic materials, and can be formed of appropriate combinations thereof.

The container holder 100 having the magnetic material 105 moves in a manner of sliding on a conveyance tile 120. In order to generate a conveyance force, a plurality of magnetic poles 707 and 707A including columnar coil shafts 705 and 705A and coils 706 wound around outer peripheries of the coil shafts 705 and 705A are provided below the conveyance tile 120. The magnetic poles 707 and 707A constitute a plurality of detection points for detecting a position of the magnetic material 105. A plurality of conveyance paths are provided above the magnetic poles 707 in a manner of covering the magnetic poles 707. - Details of the coil shafts 705 and 705A and the coils 706 will be described later.

The conveyance tile 120 is formed of a flat surface having a small frictional force, and the container holder 100 slides on an upper surface of the conveyance tile 120.

In the conveying device 700 according to the present embodiment, the plurality of magnetic poles 707 provided therein are used to detect the position of the magnetic material 105 and are also used to convey the magnetic material 105, that is, to convey a sample.

The magnetic poles 707 are connected to a drive unit 708 that applies predetermined voltages to the magnetic poles 707 to cause predetermined currents to flow through the coil 706. The magnetic pole 707 to which a voltage is applied by the drive unit 708 acts as an electromagnetic stone, and attracts the magnetic material 105 in the container holder 100 on the conveyance tile 120. After the container holder 100 is attracted by the magnetic pole 707, voltage application to the magnetic pole 707 by the drive unit 708 is stopped, and a voltage is applied to a different magnetic pole 707 adjacent to the magnetic pole 707 by the drive unit 708 in the same manner as described above, so that the magnetic material 105 in the container holder 100 is attracted to the adjacent magnetic pole 707.

By repeating this procedure at all the magnetic poles 707 constituting the conveyance paths, the sample in the sample container 150 that is mounted on the container holder 100 provided with the magnetic material 105 is conveyed to the destination.

An operation unit 709 calculates a current flowing through each coil 706 using various types of information such as position information, speed information, and weight information of the container holder 100, and outputs a command signal to each drive unit 708. The drive unit 708 applies a voltage to the corresponding coil 706 based on the command signal.

A detection unit 710 indirectly obtains the position of the sample container 150 by detecting a current flowing through the coil 706 of the magnetic pole 707 and a flow direction of the current and obtaining the position of the magnetic material 105. This principle is as follows.

The coil shaft 705 is made of a magnetic material, and has the property that a magnetic flux passing through the coil shaft 705 becomes more difficult to pass as the magnetic flux increases. Here, when a voltage is applied to the coil 706 and a current flows, a magnetic flux generated by the current is generated in the coil shaft 705. Therefore, a magnetic flux generated by the magnetic material 105 and a magnetic flux generated by a current flowing through the coil 706 are generated in the coil shaft 705.

In general, when a current flows through the coil 706, a magnetic field is generated around the coil 706, and the generated magnetic flux is proportional to a value of a current flowing through the coil 706. This proportional constant is called inductance. However, in a circuit having a magnetic material such as the coil shaft 705, inductance ($L = \mu \cdot N^2 \cdot S/l$, L: inductance, $\mu$: magnetic permeability, N: the number of turns of coil 706, S: cross-sectional areas of coil shaft 705 and coil 706, and l: length of coil 706) changes due to saturation characteristics of the coil shaft 705.

When the coil shaft 705 saturates, the inductance changes depending on a magnitude of the magnetic flux generated in the coil shaft 705. That is, inductance of the coil 706 changes depending on a magnitude of a magnetic flux of the magnetic material 105. This means that the inductance of the coil 706 changes depending on the position of the magnetic material 105.

A voltage V generated in the coil 706 is represented by a relationship as shown below.

$$V = -d\varphi/dt \quad (1)$$

Here, $\varphi$ is magnetic flux, and t is time. The voltage V is represented by an amount of change in magnetic flux per unit time.

When a current is I and inductance is L, the following relationship of dI/dt = (1/L) × (dφ/dt) (2) is established. Thus, a relationship of dI/dt = -V/L (3) is established based on the formulas (1) and (2).

That is, when a constant voltage is applied to the coil 706, time derivative of the supplied current I changes depending on a magnitude of the inductance L as shown in formula (3). This means that the supplied current rises differently when a voltage is applied.

Accordingly, when a voltage is applied to the coil 706, the inductance L can be obtained by calculation by detecting a current flowing through the coil 706 and a flow direction of the current. That is, by detecting the inductance L of the coil 706 that changes depending on the position of the magnetic material 105, the position of the magnetic material 105 that affects the inductance L is obtained.

Next, the configuration of the magnetic pole 707 in the conveying device 700 according to the invention will be described.

As described above, in a conveying method using the electromagnetic conveyance, in order to enable conveyance of the container holder 100 from a short distance of several meters to a long distance of several tens of meters, at least one or more, preferably a plurality of conveyance tiles 120 are arranged, each having several tens of magnetic poles 707 arranged vertically and horizontally.

In the conveying device 700, the magnetic poles 707 are arranged in a.lattice pattern, an electromagnetic force is generated by applying a current to the coils 706 of the arranged magnetic poles 707, and the magnetic material 105 in the container holder 100 uses a force of attraction to the electromagnetic force to convey the container holder 100, but required characteristics of a plurality of magnetic poles in the conveying device 700 differ depending on arrangement positions in the conveying device 700.

Generally, a coefficient of static friction acting at a moment when an object starts moving is larger than a coefficient of motion friction acting during movement of the object. That is, a magnetic pole directly below a position where the container holder 100 does not stop, that is, a magnetic pole that generates a driving force for starting movement of the container holder 100 from a position where the container holder 100 stops requires a larger driving force than a magnetic pole directly below the position where the container holder 100 stops.

On the other hand, the magnetic poles directly below the position where the container holder 100 stops are required to have high stop position accuracy of the container holder 100 in order to avoid interference with the adjacent container holder 100 and ensure robustness when the container holder 100 operates next.

A "position where the container holder 100 stops" is a position where a conveyance direction of the container holder 100 is required to be changed, and in FIG. 2 and the like, corresponds to a position of a central portion of a portion disposed in a cross shape in the conveyance tile 120.

A "position where the container holder 100 does not stop" is a position where the conveyance direction of the container holder 100 is not required to be changed, and in FIG. 2 and the like, corresponds to a position adjacent to the central portion of the portion disposed in the cross shape in the conveyance tile 120, and is a position where a large thrust is required to move the container holder 100 stopped at a stop position.

Here, in the conveying device 700 according to the present embodiment, the magnetic poles for conveyance also serve to drive the container holder 100 and to detect a position of the container holder 100 at the same time. However, a driving force and position detection accuracy are in a trade-off relationship.

In FIG. 4, (a) is a case where a diameter of the coil shaft 705 is large. Since the coil shaft 705 receives a large amount of magnetic flux, an electromagnetic force, that is, a thrust force, to the magnetic material 105 on a container holder 100 side can be increased. In FIG. 4, (b) is a case where the diameter of the coil shaft 705 is small, and an amount of magnetic flux entering the coil shaft 705 is small, resulting in a smaller thrust.

In FIG. 5, (a) is a case where the diameter of the coil shaft 705 is small, and since a magnetic flux of the coil shaft 705 is easily saturated, a rate of change in inductance is large. In FIG. 5, (b) is a case where the diameter of the coil shaft 705 is large, and since a magnetic flux of the coil shaft 705 is less likely to be saturated, a rate of change in inductance is small.

Thus, it is difficult to satisfy both securing of the driving force and the position detection accuracy with magnetic poles having the same specification. On the other hand, as a result of intensive studies by the present inventors, the present inventors have conceived that specifications of either the coils 706 or the coil shafts 705 and 705A are different between the magnetic pole 707 directly below a position where the container holder 100 does not stop and the magnetic pole 707A directly below a position where the container holder 100 stops.

In FIGS. 2 and 3, only the coil shafts 705 and 705A have two different specifications.

More specifically, as the specifications, the magnetic permeability $\mu$ of the coil shafts 705 and 705A is changed. The magnetic permeability $\mu$ is ease of magnetization of a substance, and is a numerical representation of the ease of magnetization of the substance.

A high detection sensitivity is required at a stop position, which requires a small rate of change in the inductance L. Conversely, a large rate of change in the inductance L is desirable at a non-stop position, which requires a high thrust force.

Here, since the inductance L has the relationship of $L = \mu \cdot N^2 \cdot S/l$ as described above, the rate of change in inductance decreases as the magnetic permeability $\mu$ of the coil shaft 705 increases.

Therefore, magnetic permeability of the coil shaft 705 of the magnetic pole 707 at the stop position is made smaller than magnetic permeability of the coil shaft 705A of the magnetic pole 707A at the non-stop position.

Although the coil 706 of the magnetic pole 707 at the stop position and the coil 706 of the magnetic pole 707A at the non-stop position have the same specifications, the coils 706 do not need to be the same, and various specifications such as a material, the number of turns N, and the length 1 may be different.

Examples of materials that have different magnetic permeability $\mu$ and are suitably selected for the coil shafts 705 and 705A include iron and aluminum having smaller magnetic permeability $\mu$ than iron. Even in the case of iron, a large amount of carbon can be contained and a small amount of carbon can be contained (high magnetic permeability > low magnetic permeability).

Although it is often better to increase inductance in design of a transformer, if the inductance is increased more than necessary, a magnetic flux density increases and may cause magnetic saturation and magnetic noise, so that it is desirable to set an optimum range to avoid the magnetic saturation and the magnetic noise.

A specification is not limited only to the magnetic permeability $\mu$ of the coil shafts 705 and 705A as illustrated in FIGS. 2 and 3 to be different between the magnetic poles 707 directly below the position where the container holder 100 does not stop and the magnetic poles 707 directly below the position where the container holder 100 stops. Hereinafter, examples of other modes will be described with reference to FIGS. 6 to 8.

For example, as illustrated in FIG. 6, as the specifications, the number of turns N of coils 706 and 706B can be changed between the magnetic pole 707 directly below a position where the container holder 100 does not stop and a magnetic pole 707B directly below a position where the container holder 100 stops.

Since the inductance L is proportional to a square of the total number of turns N of the coil 706, the more winding wires N of the coil 706, the smaller the rate of change in inductance.

Therefore, in a conveying device 700A illustrated in FIG. 6, the number of turns of the coil 706 of the magnetic pole 707 at the stop position is smaller than the number of turns of the coil 706B of the magnetic pole 707B at the non-stop position.

Although the coil shaft 705 of the magnetic pole 707 at the stop position and the coil shaft 705 of the magnetic pole 707B at the non-stop position have the same specifications, the coil shafts 705 do not need to be the same, and the magnetic permeability may be different, as in FIG. 2 and the like, or one or more of various specifications such as material, cross-sectional area, and length may be different.

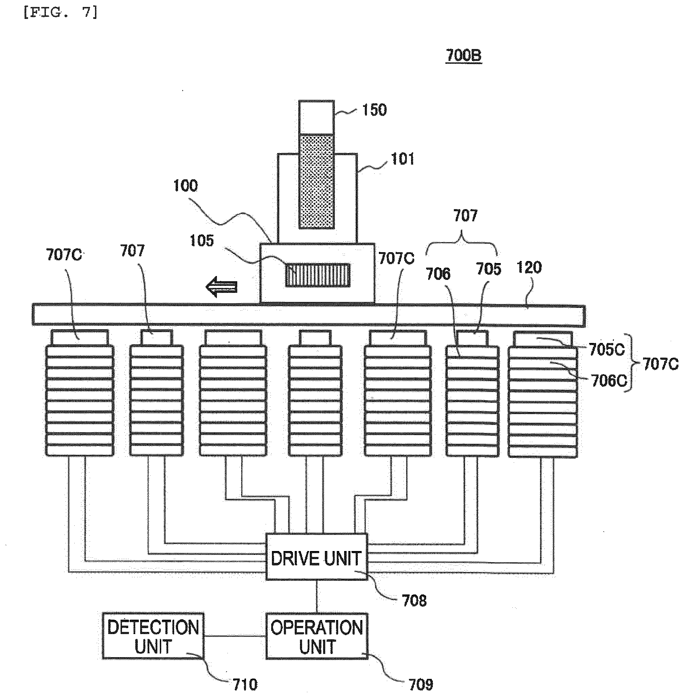

As in a conveying device 700B illustrated in FIG. 7, cross-sectional areas S of coils 706 and 706C can be made different.

The cross-sectional area S of the coil 706 is proportional to a square of a diameter (S = PI $\times$ D$^2$/4).

Here, since the coils 706 and 706C are wound around outer peripheries of coil shafts 705 and 705C, inner diameters of the coils 706 and 706C are the same as outer diameters of the coil shafts 705 and 705C.

Therefore, when the coil shafts 705 and 705C are made of the same material, magnetic resistance decreases and an amount of magnetic flux entering increases when the diameter of the coil shaft is large. On the other hand, when the diameter of the coil shaft is small, the magnetic resistance increases and the amount of magnetic flux entering decreases. That is, the larger the cross-sectional area S of the coil 706 is, the smaller the rate of change in inductance is.

Therefore, the cross-sectional area of the coil shaft 705 and the coil 706 of the magnetic pole 707 at the stop position is made smaller than the cross-sectional area of the coil shaft 705C and the coil 706C of the magnetic pole 707C at the non-stop position.

Instead of the number of turns N of the coils 706 and 706C, a thickness of a wire of a winding wire constituting the coil 706 may be changed.. When a diameter of the winding wire is increased, resistance R at I [A] = V/R is decreased based on resistance formula, and thus I [A] is increased. That is, since thrust can be secured, a coil implemented by a thick winding wire can be used as the magnetic pole at the non-stop position, and a coil implemented by a relatively thin winding wire can be used as the magnetic pole at the stop position.

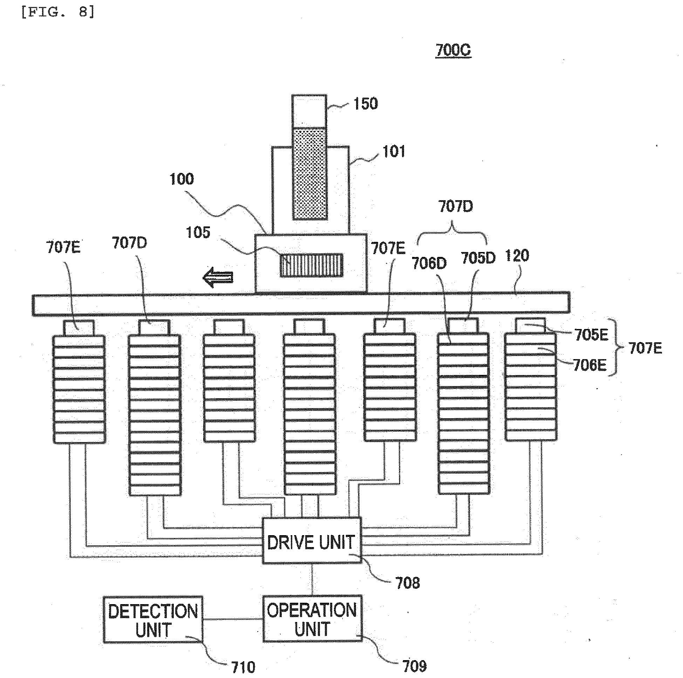

Further, as illustrated in FIG. 8, lengths 1 of coils 706D and 706E and coil shafts 705D and 705E can be changed as the specifications.

Since the inductance L is inversely proportional to the length 1 of the coil 706, the shorter the length 1 of the coil, the smaller the rate of change in inductance.

Therefore, in a conveying device 700C illustrated in FIG. 8, lengths of the coil shaft 705E and coil 706E constituting magnetic pole 707E at the non-stop position are made shorter than lengths of the coil shaft 705D and coil 706D of magnetic pole 707D at the stop position.

As the length increases, the magnetic resistance increases, and the amount of magnetic flux entering may decrease, so that it is desirable to set the length appropriately.

In FIGS. 3, 5, 6, and 7 described above, a mode is illustrated in which two types of magnetic poles are used in any one of the specifications of "the magnetic permeability $\mu$ of the coil shaft 705, the winding wire N of the coil 706, the cross-sectional area S of the coil 706, and the length 1 of the coil 706". This is because the fewer the specifications, the easier the manufacturing, an increase in manufacturing cost can be prevented, and an increase in power consumption can be prevented. The configuration is suitable for mounting, but three or more specifications can be changed.

FIGS. 3, 5, 6, and 7 can be appropriately mixed such as changing "the magnetic permeability $\mu$ of the coil shaft 705 and the winding wire N of the coil 706", and three or more specifications can be changed.

According to the configuration in which three or more specifications are changed, it is possible to attain an advantage that it is possible to arrange a magnetic pole more specific for position detection and a magnetic pole suitable for driving at suitable points.

Next, an example of a suitable magnetic pole arrangement when conveying devices 700 are adjacent will be described with reference to FIGS. 9 and 10.

A thrust at an end portion of the conveyance tile 120 is preferably weakened due to a relationship of a yoke shape provided in an end portion of the coil shaft 705 on a side opposite to a conveyance tile 120 side.

Therefore, as illustrated in FIGS. 9 and 10, when a plurality of conveyance tiles 120 are provided, with the end portion of the conveyance tile 120 in contact with another conveyance tile 120 being set to a position where the container holder 100 does not stop, it is desirable that a magnetic pole 707F at a non-stop position, which is located at the end portion and is adjacent to the other conveyance tile 120 for the conveying device 700, is designed to emphasize the driving force compared with a magnetic pole 707G at a stop position.

A specification of the magnetic pole 707F at the non-stop position may be any one or more of making magnetic permeability of a coil shaft 705F larger than magnetic permeability of a coil shaft 705G of the magnetic pole 707G at the stop position, making the number of turns of a coil 706F larger than the number of turns of a coil 706G of the magnetic pole 707 at the stop position, making a cross-sectional area of the coil shaft 705F and the coil 706F wider than a cross-sectional area of the coil shaft 705G and the coil 706G, and making the coil shaft 705F and the coil 706F shorter than the coil shaft 705G and the coil 706G, or other specifications may be different, with no particular limitations.

In FIGS. 9 and 10, a mode is illustrated in which a position adjacent to a central portion of a portion disposed in a cross shape in the conveyance tile 120 which is a "position where the container holder 100 does not stop" in FIG. 2 and the like is also a "position where the container holder 100 stops", and similarly to FIG. 2 and the like, a position adjacent to the central portion of the portion disposed in the cross shape in the conveyance tile 120 is set as the "position where the container holder 100 does not stop", and end portions and magnetic poles having the same or different specifications can be arranged.

Next, effects of the present embodiment will be described.

In the conveying device 700 in the sample analysis system 1000 according to the present embodiment described above, specifications of any one of the coils 706, 706B, 706C, 706D, 706E, 706F, and 706G and the coil shafts 705, 705A, 705C, 705D, 705E, 705F, and 705G are different between the magnetic poles 707A, 707B, 707C, 707E, and 707G directly below the position where the container holder 100 does not stop and the magnetic poles 707, 707D, and 707G directly below the position where the container holder 100 stops in the conveyance tile 120.

Accordingly, it is possible to provide the magnetic poles 707A, 707B, 707C, 707D, 707E, 707F, and 707G suitable for either "driving the container holder 100" or "detecting a position of the container holder 100" according to a role of positions of the magnetic poles 707A, 707B, 707C, 707D, 707E, 707F, and 707G of the conveying device 700 in the conveyance tile 120, and to implement stable conveyance while reducing power consumption.

Since the magnetic permeability $\mu$ of the coil shafts 705 and 705A, the number of turns N of the coils 706 and 706B, the cross-sectional area S of the coils 706. and 706C, and the length 1 of the coils 706D and 706E are changed as the specifications, it is possible to easily change the specifications without changing many specifications, and both stable conveyance and prevention of an increase in power consumption can be reliably achieved.

Further, when a plurality of the conveyance tiles 120 are provided, by setting the end portion of the conveyance tile 120. in contact with another conveyance tile 120 at a position where the container holder 100 does not stop, it is possible to implement stable and quick conveyance of the container holder 100 by disposing the magnetic pole 707F having a large thrust in the end portion in which the thrust is assumed to be low.

<Others>

The invention is not limited to the above embodiment, and various modifications and applications can be made thereto. The embodiment described above has been described in detail for easy understanding of the invention, and the invention is not necessarily limited to those having all the configurations described above.

Reference Signs List

| | |
|---|---|
| 100: | container holder |
| 101: | gripping part |
| 105: | magnetic material |
| 120: | conveyance tile |
| 150: | sample container |
| 700, | 700A, 700B, 700C: conveying device |
| 705, | 705A, 705C, 705D, 705E, 705F, 705G: coil shaft |
| 706, | 706B, 706C, 706D, 706E, 706F, 706G: coil |
| 707, | 707A, 707B, 707C, 707D, 707E, 707F, 707G: magnetic pole |
| 708: | drive unit |
| 709: | operation unit |
| 710: | detection unit |
| 800: | analyzer |
| 900: | control computer |

1000: sample analysis system

**Claims**

1. A sample conveying device that conveys a sample container containing a sample, comprising:

   a holder that includes a magnetic material and holds the sample container; and
   a conveyance tile that includes a plurality of magnetic poles, each of which includes a coil shaft and a coil wound around an outer peripheral side of the coil shaft, wherein
   specifications of either the coil or the coil shaft are different between the magnetic pole directly below a position where the holder does not stop and the magnetic pole directly below a position where the holder stops in the conveyance tile.

2. The sample conveying device according to claim 1, wherein
   as the specifications, magnetic permeability of the coil shaft is changed.

3. The sample conveying device according to claim 1, wherein
   as the specifications, the number of turns of the coil is changed.

4. The sample conveying device according to claim 1, wherein
   as the specifications, cross-sectional areas of the coil and the coil shaft are changed.

5. The sample conveying device according to claim 1, wherein
   as the specifications, a length of the coil is changed.

6. The sample conveying device according to claim 1, wherein
   when a plurality of the conveyance tiles are provided, an end portion of the conveyance tile in contact with the other conveyance tiles is set to a position where the holder does not stop, and one or more of the other points is set to a position where the holder stops.

7. A sample analysis system comprising the sample conveying device according to claim 1.

8. A method for conveying a sample contained in a sample container held in a holder provided with a magnetic material, comprising:

   arranging one or more conveyance tiles that include a plurality of magnetic poles, each of which includes a coil shaft and a coil wound around an outer peripheral side of the coil shaft; and
   conveying the sample by sliding the holder on the conveyance tile by an interaction between the magnetic material and the magnetic pole, wherein
   the specifications of either the coil or the coil shaft are different between the magnetic pole directly below a position where the holder does not stop and the magnetic pole directly below a position where the holder stops.

[FIG. 1]

1000

| 800 | 700 | 700 | 800 |
|---|---|---|---|
| ANALYZER | CONVEYING DEVICE | CONVEYING DEVICE | ANALYZER |

900

CONTROL COMPUTER

| | 700 CONVEYING DEVICE | CONVEYING DEVICE 700 | |
|---|---|---|---|
| 700 | CONVEYING DEVICE | CONVEYING DEVICE 700 | |
| 800 700 700 | CONVEYING DEVICE | CONVEYING DEVICE 700 | |
| ANALYZER | CONVEYING DEVICE | CONVEYING DEVICE 700 | |
| ANALYZER | CONVEYING DEVICE | CONVEYING DEVICE | |

| 800 | 700 | 700 |
|---|---|---|

[FIG. 2]

[FIG. 3]

[FIG. 4]

(a)

705

706

MAGNETIC FLUX

AMOUNT OF
MAGNETIC FLUX THAT
ENTERS IS LARGE

⬇

THRUST IS LARGE

(b)

705

706

MAGNETIC FLUX

AMOUNT OF
MAGNETIC FLUX THAT
ENTERS IS SMALL

⬇

THRUST IS SMALL

[FIG. 5]

(a)

705

706

MAGNETIC FLUX

MAGNETIC FLUX IS
EASILY SATURATED

⇩

RATE OF CHANGE IN
INDUCTANCE IS LARGE

(b)

705

706

MAGNETIC FLUX

MAGNETIC FLUX IS
HARDLY SATURATED

⇩

RATE OF CHANGE IN
INDUCTANCE IS SMALL

[FIG. 6]

700A

DRIVE UNIT

708

DETECTION
UNIT

710

OPERATION
UNIT

709

[FIG. 7]

[FIG. 8]

[FIG. 9]

[FIG. 10]

| INTERNATIONAL SEARCH REPORT | International application No. |
|---|---|
| | **PCT/JP2022/008252** |

**A. CLASSIFICATION OF SUBJECT MATTER**

*B65G 54/02*(2006.01)i; *G01N 35/04*(2006.01)i
FI: G01N35/04 G; B65G54/02

According to International Patent Classification (IPC) or to both national classification and IPC

**B. FIELDS SEARCHED**

Minimum documentation searched (classification system followed by classification symbols)

B65G54/02; G01N35/00-37/00; H02N15/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-077971 A (F. HOFFMANN-LA ROCHE AG) 27 April 2017 (2017-04-27) | 1-8 |
| A | JP 6-156730 A (EBARA CORP.) 03 June 1994 (1994-06-03) | 1-8 |
| A | JP 2019-505796 A (F. HOFFMANN-LA ROCHE AG) 28 February 2019 (2019-02-28) | 1-8 |
| A | WO 2021/065362 A1 (HITACHI HIGH TECH CORP.) 08 April 2021 (2021-04-08) | 1-8 |
| A | JP 4-350023 A (MITSUBISHI HEAVY INDUSTRIES, LTD.) 04 December 1992 (1992-12-04) | 1-8 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 April 2022** | **17 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/008252**

| Patent document cited in search report | | | Publication date (day/month/year) | Patent family member(s) | | | Publication date (day/month/year) |
|---|---|---|---|---|---|---|---|
| JP | 2017-077971 | A | 27 April 2017 | US | 2014/0234065 | A1 | |
| JP | 6-156730 | A | 03 June 1994 | (Family: none) | | | |
| JP | 2019-505796 | A | 28 February 2019 | US | 2018/0340951 | A1 | |
| WO | 2021/065362 | A1 | 08 April 2021 | JP | 2021-58052 | A | |
| JP | 4-350023 | A | 04 December 1992 | US | 5248236 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2017077971 A